# EUROPÄISCHE PATENTSCHRIFT

(11) **EP 2 151 737 B1**
(45) Veröffentlichungstag und Bekanntmachung des Hinweises auf die Patenterteilung: **13.03.2013**
(21) Anmeldenummer: 09100366.5
(22) Anmeldetag: 27.07.2009
(51) Int. Cl.: G06F 1/26

(54) **Schaltungsanordnung für eine serielle Kommunikation mit Aufweckfuntion**
Switch assembly for a serial communication with wake-up function
Agencement de commutation pour une communication série avec fonction de réveil

(30) Priorität: 01.08.2008 DE 102008035920
(43) Veröffentlichungstag der Anmeldung: 10.02.2010
(73) Patentinhaber: KNORR-BREMSE Systeme für Nutzfahrzeuge GmbH, 80809 München (DE)
(72) Erfinder: Feucht, Thomas, 71299, Wimsheim (DE)
(74) Vertreter: Schönmann, Kurt

(56) Entgegenhaltungen:
- WO-A-01/09705
- US-A- 5 799 196
- US-A1- 2008 092 248

## Beschreibung

Die Erfindung betrifft eine Schaltungsanordnung für eine serielle Kommunikation mit Aufweckfunktion nach dem Oberbegriff des Patentanspruchs 1 und ein Verfahren hierzu, und bezieht sich insbesondere auf eine ruhestromlose Schaltungsanordnung für eine serielle Schnittstelle mit bidirektionaler Aufweckfunktion in einem Kraftfahrzeug.

Sind in einem Kraftfahrzeug elektronische Steuereinrichtungen, intelligente Sensoren und Aktuatoren oder Aktoren zur Erfassung und Steuerung des Fahrzeugbetriebs verbaut, ist häufig in Fällen, in welchen das Gesamtsystem inaktiv ist oder sich in einem Bereitschaftszustand befindet, eine Aufweckfunktion vorgesehen, um die beteiligten Teilsysteme aus ihrem jeweiligen Bereitschaftszustand wieder in einen betriebsbereiten Zustand versetzen zu können. Für derartige Anwendungen wird vorwiegend eine LIN (Local Interconnect Network)- oder eine K-Line- bzw. Diagnose-Schnittstelle mit Aufweckfunktion bzw. Wake-Up-Funktion verwendet. Bei diesen Schnittstellen handelt es sich um an die ISO-Norm 9141 angelehnte Kommunikationsstandards, bei welchen die Kommunikation auf einer bitseriellen Eindrahtleitung nach dem SCI (UART) Datenformat basiert und die maximale Übertragungsgeschwindigkeit 20 KBit/s beträgt.

Nachteilig bei den vorgenannten Schnittstellen sind zum einen deren Implementationskosten aufgrund einer gewissen Komplexität, beispielsweise bei der protokollbasierten und dadurch Treiber erfordernden LIN-Schnittstelle, und zum anderen deren ständig benötigter Ruhestrom auch im ausgeschalteten Zustand insbesondere für die Aufweckfunktion. Dieser Ruhestrom muss zur Gewährleistung der Aufweckfunktion ständig bereitgestellt werden und belastet dadurch die Fahrzeugelektrik sowohl hinsichtlich einer Beanspruchung der eingesetzten Bauelemente als auch hinsichtlich einer verkürzten sicheren Betriebsbereitschaft etwa eines abgestellten Fahrzeugs.

Die Druckschrift WO 01/09705 A offenbart ein Kommunikationssystem mit seriellem Bus, bei dem eine Mehrzahl von Sender/Empfänger-Modulen über einen seriellen Bus mit einer zentralen elektronischen Steuereinheit verbunden sind. Die zentrale elektronische Steuereinrichtung kann die Module aus einem Schlafzustand durch Ausgeben eines Aufwachsignals auf den seriellen Bus aufwecken. Ein Ferritkern in dem Modul dient als Ein- und Auskoppelelement und wandelt das Aufwachsignal in einen Strom um. Sodann setzt eine Leuchtdiode den Strom in Licht um. Ein Fototransistor erfasst dieses Licht und schaltet daraufhin eine Leistungsversorgung für das Modul zu.

Der Erfindung liegt daher als eine Aufgabe zugrunde, eine kostengünstige serielle Kommunikation über eine Schnittstelle zwischen einem Sensor- bzw. Aktor-Teilsystem und einer zentralen elektronischen Steuereinrichtung zu schaffen, welche ruhestromlos und bidirektional eine Aufweckfunktion bereitstellt.

Erfindungsgemäß wird diese Aufgabe durch die kennzeichnenden Merkmale des Patentanspruchs 1 und die Merkmale des Patentanspruchs 11 gelöst.

Vorteilhafte Weiterbildungen der Erfindung sind Gegenstand der beigefügten Unteransprüche.

Der Erfindung liegt der allgemeine Gedanke zugrunde, eine kostengünstige serielle Kommunikation zwischen einer Sensor/Aktor-Anordnung und einem elektronischen Steuergerät mit bis zu 20 KBit/s Übertragungsgeschwindigkeit bereitzustellen, welche bidirektional aufweckfähig ist, indem eine Aufweck-Schalteinrichtung bereitgestellt wird, welche zunächst auf der Seite der Sensor/Aktor-Anordnung aus einem ruhestromlosen Bereitschaftszustand derselben die Versorgungsspannung zuschaltet. Diese Zuschaltung wird über eine Zweidrahtleitung dem Steuergerät kommuniziert, welches dann ebenfalls seinen Bereitschaftszustand verlässt. Das Verlassen des Bereitschaftszustands des Steuergeräts wiederum wird über die Zweidrahtleitung der Sensor/Aktor-Anordnung kommuniziert, so dass durch Halten entsprechender Zustände von Versorgungsspannungsschaltern unabhängig von der Position der Aufweck-Schalteinrichtung zu dieser Zeit eine Selbsthaltung der Versorgungsspannung erzielt wird.

Die Aufgabe wird somit gelöst durch eine Schaltungsanordnung für eine serielle Kommunikation, dadurch gekennzeichnet, dass
- die erste Teil-Schaltungsanordnung eine erste Schalteinrichtung, die mit der Aufweck-Schalteinrichtung verbunden ist, und eine erste Tiefpasseinrichtung aufweist;
- die zweite Teil-Schaltungsanordnung eine zweite Schalteinrichtung und eine zweite Tiefpasseinrichtung aufweist; und
- die Schaltungsanordnung derart angeordnet ist, dass sie
- mit einem Versetzen der ersten Schalteinrichtung in den Schließzustand durch die Aufweck-Schalteinrichtung am Ausgang der ersten Tiefpasseinrichtung einen Pegel erzeugt, der die zweite Schalteinrichtung in den Schließzustand versetzt, und
- mit dem Versetzen der zweiten Schalteinrichtung in den Schließzustand am Ausgang der zweiten Tiefpasseinrichtung einen Pegel erzeugt, der die erste Schalteinrichtung in ihrem Schließzustand hält.

Bevorzugt beinhaltet die erste Teil-Schaltungsanordnung eine mit der ersten Schalteinrichtung verbundene erste Signalformereinrichtung zum Formen eines Signals auf einer Datenempfangsleitung der ersten Teil-Schaltungsanordnung, eine mit der ersten Signalformereinrichtung verbundene erste Transistoreinrichtung zum Steuern einer Datenkommunikation auf einer Datensendeleitung der ersten Teil-Schaltungsanordnung, die in der Datensendeleitung der ersten Teil-Schaltungsanordnung angeordnete erste Tiefpasseinrichtung, und die Aufweck-Schalteinrichtung; und ist die erste Schalteinrichtung dazu angeordnet, eine Versorgungsspannung der ersten Teil-Schaltungsanordnung zu schalten.

Weiter bevorzugt beinhaltet die zweite Teil-Schaltungsanordnung eine mit der zweiten Schalteinrichtung verbundene zweite Signalformereinrichtung zum Formen eines Signals auf einer Datenempfangsleitung der zweiten Teil-Schaltungsanordnung, eine mit der zweiten Schalteinrichtung verbundene zweite Transistoreinrichtung zum Steuern einer Datenkommunikation auf einer Datensendeleitung der zweiten Teil-Schaltungsanordnung, und die in der Datensendeleitung der zweiten Teil-Schaltungsanordnung angeordnete zweite Tiefpasseinrichtung, und ist die zweite Schalteinrichtung dazu angeordnet, eine Versorgungsspannung der zweiten Teil-Schaltungsanordnung zu schalten.

Vorzugsweise ist die Aufweck-Schalteinrichtung dazu angeordnet, zum Aufwecken der ersten und der zweiten Teil-Schaltungsanordnung die erste Schalteinrichtung in einen Schließzustand zu versetzen.

Bevorzugt wird durch das Versetzen der ersten Schalteinrichtung in den Schließzustand die erste Transistoreinrichtung mit einer Betriebsspannung versorgt und nimmt der Ausgang der ersten Tiefpasseinrichtung den Pegel derart an, dass die zweite Schalteinrichtung in einen Schließzustand versetzt wird.

Bevorzugt wird durch das Versetzen der zweiten Schalteinrichtung in den Schließzustand die zweite Transistoreinrichtung mit der Betriebsspannung versorgt und nimmt ein Ausgang der zweiten Tiefpasseinrichtung den Pegel derart an, dass die erste Schalteinrichtung unabhängig von einem Schaltzustand der Aufweck-Schalteinrichtung in ihrem Schließzustand verbleibt.

Vorteilhaft ist die erste Teil-Schaltungsanordnung eine Sensoreinrichtung, eine Aktoreinrichtung oder eine Sensor/Aktor-Einrichtung.

Weiter vorteilhaft ist die zweite Teil-Schaltungsanordnung eine zentrale elektronische Steuereinrichtung.

Noch vorteilhafter ist die erste Teil-Schaltungsanordnung Teil eines Fußbremsmoduls eines elektronischen Bremssystems in einem Kraftfahrzeug, und ist die zweite Teil-Schaltungsanordnung eine zentrale elektronische Steuereinheit des elektronischen Bremssystems in dem Kraftfahrzeug.

Auch bevorzugt sind die erste und die zweite Schaltungsanordnung digitale Schaltungsanordnungen, und sind die erste und die zweite Schalteinrichtung elektronische Schalter.

Die Aufgabe wird auch gelöst durch ein Verfahren zum Aufwecken einer ersten Teil-Schaltungsanordnung und einer zweiten Teil-Schaltungsanordnung, welche über Kommunikationsleitungen verbunden sind und eine bidirektionale Vollduplex-Kommunikationsschnittstelle mit einer Übertragungsrate von bis zu 20 KBit/s bilden, mittels einer Aufweck-Schalteinrichtung aus einem ruhestromlosen Bereitschaftszustand derselben, gekennzeichnet durch die Schritte:
- Versetzen der Aufweck-Schalteinrichtung in einen Schließzustand,
- Versetzen einer ersten Schalteinrichtung in der ersten Teil-Schaltungsanordnung in einen Schließzustand;
- Versorgen einer ersten Transistoreinrichtung mit einer Betriebsspannung;
- Versetzen eines Ausgangs einer ersten Tiefpasseinrichtung in einen hochpegeligen Zustand;
- Versetzen einer zweiten Schalteinrichtung in der zweiten Teil-Schaltungsanordnung in einen Schließzustand;
- Versorgen einer zweiten Transistoreinrichtung mit einer Betriebsspannung; und
- Versetzen eines Ausgangs einer zweiten Tiefpasseinrichtung in einen hochpegeligen Zustand; wobei
- sodann unabhängig von dem Schaltzustand der Aufweck-Schalteinrichtung der hochpegelige Zustand an dem Ausgang der zweiten Tiefpasseinrichtung die erste Schalteinrichtung in ihrem Schließzustand hält, und der hochpegelige Zustand an dem Ausgang der ersten Tiefpasseinrichtung die zweite Schalteinrichtung in ihrem Schließzustand hält.

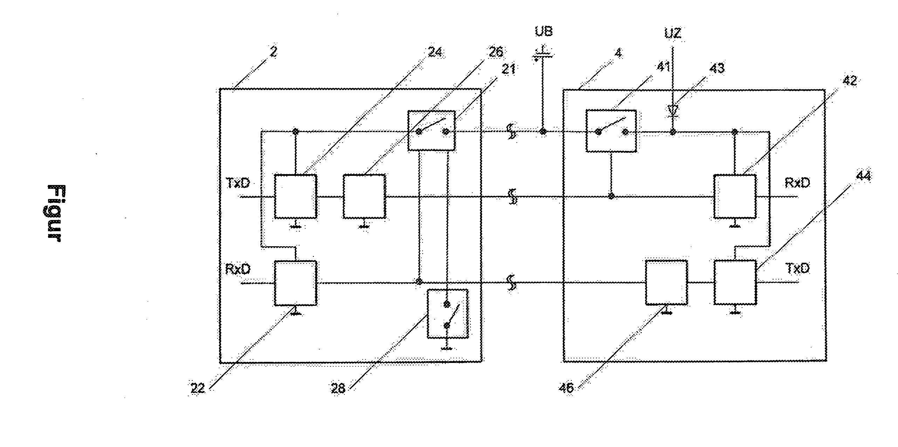

Die Erfindung wird nachstehend anhand eines bevorzugten Ausführungsbeispiels unter Bezugnahme auf die Zeichnung näher beschrieben.

Die einzige Figur zeigt vereinfacht eine Schaltungsanordnung einer seriellen Schnittstelle mit Aufweckfunktion für Sensoren und Aktoren.

In der Figur ist linksseitig mit dem Bezugszeichen 2 eine Sensor- bzw. Aktor-Einrichtung bezeichnet, beispielsweise ein Fußbremsmodul eines elektronischen Bremssystems in einem Nutzfahrzeug zur Erfassung und/oder Auslösung eines Bremsvorgangs gemäß einem Fahrerwunsch. Das Bezugszeichen 21 bezeichnet eine erste Schalteinrichtung in der Sensor- bzw. Aktor-Einrichtung 2, beispielsweise einen elektronischen Schalter. Das Bezugszeichen 22 bezeichnet eine erste Signalformereinrichtung zur Formung und Verarbeitung von über einen Empfangsdatenleitungsabschnitt RxD der Sensor- bzw. Aktoreinrichtung 2 empfangenen Erfassungsdaten bzw. auf einen Sendedatenleitungsabschnitt TxD der Sensor- bzw. Aktoreinrichtung 2 auszugebenden Steuerdaten, d. h. einen Schmitt-Trigger, welcher durch eine sich in dem Leitungsabschnitt befindende Tiefpasseinrichtung verformte Signale zurückformt und rekonstruiert, das Bezugszeichen 24 bezeichnet eine erste Transistoreinrichtung bzw. eine Verstärkereinrichtung zur Ausgabe von Steuerdaten an einen physikalischen Aktor oder Aktuator über die Sendeleitung TxD, und das Bezugszeichen 26 bezeichnet eine erste Tiefpasseinrichtung. Das Bezugszeichen 28 bezeichnet schließlich einen Aufweck- oder Wake-Up-Schalter.

In der Sensor- bzw. Aktor-Einrichtung 2 sind die erste Signalformereinrichtung 22, die erste Transistoreinrichtung 24, die erste Tiefpasseinrichtung 26 und der Aufweckschalter 28 jeweils mit einem Massepotenzial, beispielsweise der Fahrzeugmasse, verbunden.

Ferner ist die erste Signalformereinrichtung 22 in der Sensor- bzw. Aktor-Einrich-tung 2 mit der ersten Schalteinrichtung 21 und der ersten Transistoreinrichtung 24 verbunden. Die erste Transistoreinrichtung 24 ist im Sendedatenpfad TxD der Sensor- bzw. Aktor-Einrichtung 2 liegend angeordnet und mit der ebenfalls im Sendedatenpfad TxD der Sensor- bzw. Aktor-Einrichtung 2 liegend angeordneten ersten Tiefpasseinrichtung 26 verbunden. Darüber hinaus ist die erste Schalteinrichtung 21 sowohl mit dem Empfangsdatenpfad RxD der Sensor- bzw. Aktor-Einrichtung 2 als auch mit dem Aufweckschalter 28 verbunden.

Grundlegend ist die in der Figur linksseitig dargestellte Sensor- bzw. Aktor-Einrichtung 2 über zumindest drei Verbindungsleitungen mit einer in der Figur rechtsseitig gezeigten zentralen elektronischen Steuereinrichtung (ECU) 4, d. h. mit einem Steuergerät des elektronischen Bremssystems, verbunden.

In der in der Figur rechtsseitig dargestellten zentralen elektronischen Steuereinrichtung 4 ist ferner mit dem Bezugszeichen 41 eine zweite Schalteinrichtung, beispielsweise ein elektronischer Schalter, bezeichnet. Das Bezugszeichen 42 bezeichnet eine zweite Signalformereinrichtung zur Formung und Verarbeitung von über einen Empfangsdatenleitungsabschnitt RxD der zentralen elektronischen Steuereinrichtung 4 empfangenen Erfassungsdaten bzw. auf einen Sendedatenleitungsabschnitt TxD der zentralen elektronischen Steuereinrichtung 4 auszugebenden Steuerdaten, d. h. einen Schmitt-Trigger, welcher durch eine sich in dem Leitungsabschnitt befindende Tiefpasseinrichtung verformte Signale zurückformt und rekonstruiert, das Bezugszeichen 44 bezeichnet eine zweite Transistoreinrichtung bzw. eine Verstärkereinrichtung zur Ausgabe von Steuerdaten an einen physikalischen Aktor oder Aktuator über die Sendeleitung TxD, und das Bezugszeichen 46 bezeichnet eine zweite Tiefpasseinrichtung. Das Bezugszeichen 43 bezeichnet weiter eine Diodenanordnung, über welche gemäß einem Fahrerwunsch eine Zünd- oder Betriebsspannung UZ über beispielsweise einen (nicht gezeigten) Zündschalter des Fahrzeugs an die zentrale elektronische Steuereinrichtung 4 anlegbar ist.

In der zentralen elektronischen Steuereinrichtung 4 sind die zweite Signalformereinrichtung 42, die zweite Transistoreinrichtung 44 und die zweite Tiefpasseinrichtung 46 jeweils mit dem Massepotenzial, beispielsweise der Fahrzeugmasse, verbunden.

Ferner ist die zweite Signalformereinrichtung 42 in der zentralen elektronischen Steuereinrichtung 4 mit der zweiten Schalteinrichtung 41, der Diodenanordnung 43 und der zweiten Transistoreinrichtung 44 verbunden. Die zweite Transistoreinrichtung 44 ist im Sendedatenpfad TxD der zentralen elektronischen Steuereinrichtung 4 liegend angeordnet und mit der ebenfalls im Sendedatenpfad TxD der zentralen elektronischen Steuereinrichtung 4 angeordneten zweiten Tiefpasseinrichtung 46 verbunden. Darüber hinaus ist die zweite Schalteinrichtung 41 mit dem Empfangsdatenpfad RxD der zentralen elektronischen Steuereinrichtung 4 verbunden.

Eine erste Verbindungsleitung führt von der ersten Schalteinrichtung 21 der Sensor- bzw. Aktor-Einrichtung 2 zu der zweiten Schalteinrichtung 41 in der zentralen elektronischen Steuereinrichtung 4. An dieser ersten Verbindungsleitung liegt auch eine Versorgungsspannung UB an, beispielsweise eine Fahrzeug-Bordnetz-spannung als eine Batteriespannung aus einer Fahrzeugbatterie von 9 bis 32 V.

Eine zweite und eine dritte Verbindungsleitung bilden die Empfangsdaten- und Sendedatenleitungen RxD und TxD bzw. TxD und RxD zwischen der Sensor- bzw. Aktor-Einrichtung 2 und der zentralen elektronischen Steuereinrichtung 4. Über die zweite und die dritte Verbindungsleitung wird somit eine Vollduplex-Zweidrahtlei-tung verwirklicht. Eine (nicht gezeigte) Steuereinrichtung bzw. ein Controller jeweils an der zweiten und der dritten Verbindungsleitung steuert und verarbeitet den über diese Leitungen laufenden Datenverkehr. Es wird angemerkt, dass die vorgeschlagene Schnittstelle mit bekannten und standardisierten Bauelementen darstellbar ist, so dass vorteilhaft geringe Kosten für zu verbauende Hardware entstehen.

Nachstehend wird die Funktionsweise dieser kostengünstigen seriellen Kommunikation zwischen beispielsweise einem Fußbremsmodul mit der Sensor- bzw. Aktor-Einrichtung 2 und der zentralen elektronischen Steuereinrichtung 4 eines elektronischen Bremssystems in einem Nutzfahrzeug mit bis zu 20 KBit/s und bidirektionaler Aufweckfähigkeit bzw. Aufwachfähigkeit näher beschrieben.

Die Schaltung besteht aus einer vollduplexen seriellen Schnittstelle, welche eine hardwareseitige Aufweckfunktion (Wake-Up-Funktion) ohne Ruhestromaufnahme ermöglicht.

Die erste Schalteinrichtung 21 in der Sensor- bzw. Aktor-Einrichtung 2 kann sowohl mittels dem Aufweckschalter 28 als auch über den Empfangsdatenpfad RxD der Sensor- bzw. Aktor-Einrichtung 2 eingeschaltet werden. Die zweite Schalteinrichtung 41 in der zentralen elektronischen Steuereinrichtung 4 kann über den Empfangsdatenpfad RxD der zentralen elektronischen Steuereinrichtung 4 eingeschaltet werden.

Befindet sich das System in einem ruhestromlosen Ruhe- oder Bereitschaftszustand und wird mittels dem Aufweckschalter 28 der Sensor- bzw. Aktor-Einrich-tung 2 über die erste Schalteinrichtung 21 die Versorgungsspannung UB für die erste Transistoreinrichtung 24 und die erste Signalformereinrichtung 22 eingeschaltet, wird der Ausgang der ersten Tiefpasseinrichtung 26 hochpegelig.

Dieses hochpegelige Spannungssignal auf der Sendedatenleitung TxD der Sensor- bzw. Aktor-Einrichtung 2 bzw. der Empfangsdatenleitung RxD der zentralen elektronischen Steuereinrichtung 4 bewirkt ein Einschalten der zweiten Schalteinrichtung 41 in der zentralen elektronischen Steuereinrichtung 4. Hierdurch werden die zweite Transistoreinrichtung 44 und die zweite Signalformereinrichtung 42 mit der Versorgungsspannung UB versorgt, wodurch der Ausgang der zweiten Tiefpasseinrichtung 46 hochpegelig wird und die erste Schalteinrichtung 21 in ihrem Schließzustand hält.

Somit wird nach erfolgtem Aufwecken der zentralen elektronischen Steuereinrichtung 4 mittels dem Aufweckschalter 28 der Sensor- bzw. Aktor-Einrichtung 2 über die Verbindung zwischen der Empfangsdatenleitung RxD und der ersten Schalteinrichtung 21 der Sensor- bzw. Aktor-Einrichtung 2 eine Selbsthaltung der Versorgungsspannung UB gewährleistet.

Ein Aufwecken ist somit bidirektional möglich durch
a) Versorgen der zentralen elektronischen Steuereinrichtung 4 mit der Betriebsspannung UZ über die Diodenanordnung 43 oder Empfangen eines entsprechenden Einschaltsignals auf der Empfangsdatenleitung RxD der zentralen elektronischen Steuereinrichtung 4, dadurch Versorgen der zweiten Transistoreinrichtung 44 mit der Betriebsspannung UB und Führen des Ausgangs der zweiten Tiefpasseinrichtung 46 in den hochpegeligen Zustand, wodurch die erste Schalteinrichtung 21 eingeschaltet und die Sensor- bzw. Aktor-Einrichtung 2 mit der Betriebsspannung UB versorgt wird;
b) Versorgen der ersten Transistoreinrichtung 24 der Sensor- bzw. Aktor-Einrichtung 2 mit der Betriebsspannung UB durch Einschalten der ersten Schalteinrichtung 21 über ein Einschaltsignal auf der Empfangsdatenleitung RxD der Sensor- bzw. Aktoreinrichtung 2 und Führen des Ausgangs der ersten Tiefpasseinrichtung 26 in den hochpegeligen Zustand, wodurch die zweite Schalteinrichtung 41 eingeschaltet und die zentrale elektronische Steuereinrichtung 4 mit der Betriebsspannung UB versorgt wird; oder
c) Einschalten der ersten Schalteinrichtung 21 der Sensor- bzw. Aktor-Einrichtung 2 mittels dem Aufweckschalter 28 und Aufwecken der Anordnung gemäß vorstehend b).

Sollen die Sensor- bzw. Aktor-Einrichtung 2 und die zentrale elektronische Steuereinrichtung 4 abgeschaltet werden, ist lediglich der Ausgang der zweiten Tiefpasseinrichtung 46 auf einen niedrigen Pegel zu legen, wodurch die erste Schalteinrichtung 21 über die Verbindung zwischen der ersten Schalteinrichtung 21 und dem Empfangsdatenpfad RxD der Sensor- bzw. Aktor-Einrichtung 2 ausgeschaltet wird, mithin die Versorgung der ersten Transistoreinrichtung 24 und der ersten Signalformereinrichtung 22 mit der Betriebsspannung unterbrochen und somit über einen entstehenden niedrigen Pegel an der ersten Tiefpasseinrichtung 26 auch die zweite Schalteinrichtung 41 ausgeschaltet wird.

Es wird somit eine kostengünstige serielle Kommunikation in Form einer 1:1-Verbindung zwischen einer Sensor- und/oder Aktor-Einrichtung 2, welche beispielsweise Teil eines Fußbremsmoduls eines Nutzfahrzeugs sein kann, und einer zentralen elektronischen Steuereinrichtung 4 über eine Vollduplex-Zweidraht-Leitungsverbindung mit einer Übertragungsrate von bis zu 20 KBit/s und bidirektionaler Aufweckfähigkeit vorgeschlagen, welche geringe Hardware-Kosten verursacht und im ausgeschalteten Zustand keinen Ruhestrom erfordert. Eine Selbsthaltung der Versorgungsspannung nach dem Aufwecken wird hierbei gewährleistet. Hierbei stellt die vorgeschlagene Lösung eine digitale, protokollunabhängig und treiberlos hardware-basiert arbeitende Schnittstelle bereit.

### Bezugszeichenliste

- 2: Sensor- bzw. Aktor-Einrichtung
- 21: erste Schalteinrichtung
- 22: erste Signalformereinrichtung
- 24: erste Transistoreinrichtung
- 26: erste Tiefpasseinrichtung
- 28: Aufweck-Schalteinrichtung
- 4: zentrale elektronische Steuereinrichtung
- 41: zweite Schalteinrichtung
- 42: zweite Signalformereinrichtung
- 43: Diodenanordnung
- 44: zweite Transistoreinrichtung
- 46: zweite Tiefpasseinrichtung

## Patentansprüche

1. Schaltungsanordnung für eine serielle Kommunikation, beinhaltend:
- eine erste Teil-Schaltungsanordnung (2) zum Empfangen und Ausgeben von Erfassungs- und/oder Ansteuersignalen;
- eine zweite Teil-Schaltungsanordnung (4) zum Empfangen und Ausgeben von Erfassungs- und/oder Ansteuersignalen;
- eine Zweidraht-Verbindungsleitung, die die erste Teil-Schaltungsanordnung (2) und die zweite Teil-Schaltungsanordnung (4) bidirektional verbindet; und
- eine Aufweck-Schalteinrichtung (28) zum Aufwecken der ersten Teil-Schaltungsanordnung (2) und der zweiten Teil-Schaltungsanordnung (4) aus einem ruhestromlosen Bereitschaftsbetriebszustand jeweils derselben, **dadurch gekennzeichnet, dass**
- die erste Teil-Schaltungsanordnung (2) eine erste Schalteinrichtung (21), die mit der Aufweck-Schalteinrichtung (28) verbunden ist, und eine erste Tiefpasseinrichtung (26) aufweist;
- die zweite Teil-Schaltungsanordnung (4) eine zweite Schalteinrichtung (41) und eine zweite Tiefpasseinrichtung (46) aufweist; und
- die. Schaltungsanordnung derart angeordnet ist, dass sie
- mit einem Versetzen der ersten Schalteinrichtung (21) in den Schließzustand durch die Aufweck-Schalteinrichtung (28) am Ausgang der ersten Tiefpasseinrichtung (26) einen Pegel erzeugt, der die zweite Schalteinrichtung (41) in den Schließzustand versetzt, und
- mit dem Versetzen der zweiten Schalteinrichtung (41) in den Schließzustand am Ausgang der zweiten Tiefpasseinrichtung (46) einen Pegel erzeugt, der die erste Schalteinrichtung (21) in ihrem Schließzustand hält.

2. Schaltungsanordnung nach Anspruch 1, **dadurch gekennzeichnet, dass** die erste Teil-Schaltungsanordnung (2) eine mit der ersten Schalteinrichtung (21) verbundene erste Signalformereinrichtung (22) zum Formen eines Datensignals auf einer Datenempfangsleitung (RxD) der ersten Teil-Schaltungsanordnung (2), eine mit der ersten Schalteinrichtung (21) verbundene erste Transistoreinrichtung (24) zum Steuern einer Datenkommunikation auf einer Datensendeleitung (TxD) der ersten Teil-Schaltungs-anordnung (2), die in der Datensendeleitung (TxD) der ersten Teil-Schaltungsanordnung (2) angeordnete erste Tiefpasseinrichtung (26), und die Aufweck-Schalteinrichtung (28) beinhaltet; und die erste Schalteinrichtung (21) dazu angeordnet ist, eine Versorgungsspannung (UB) der ersten Teil-Schaltungsanordnung (2) zu schalten.

3. Schaltungsanordnung nach Anspruch 1 oder 2, **dadurch gekennzeichnet, dass** die zweite Teil-Schaltungsanordnung (4) eine mit der zweiten Schalteinrichtung (41) verbundene zweite Signalformereinrichtung (42) zum Formen eines Datensignals auf einer Datenempfangsleitung (RxD) der zweiten Teil-Schaltungs-anordnung (4), eine mit der zweiten Schalteinrichtung (41) verbundene zweite Transistoreinrichtung (44) zum Steuern einer Datenkommunikation auf einer Datensendeleitung (TxD) der zweiten Teil-Schaltungsanordnung (4), und die in der Datensendeleitung (TxD) der zweiten Teil-Schaltungs-anordnung (4) angeordnete zweite Tiefpasseinrichtung (46) beinhaltet, und die zweite Schalteinrichtung (41) dazu angeordnet ist, eine Versorgungsspannung (UB) der zweiten Teil-Schaltungsanordnung (4) zu schalten.

4. Schaltungsanordnung nach Anspruch 2 oder 3, **dadurch gekennzeichnet, dass** die Aufweck-Schalteinrichtung (28) dazu angeordnet ist, zum Aufwecken der ersten und der zweiten Teil-Schaltungsanordnung (2, 4) die erste Schalteinrichtung (21) in einen Schließzustand zu versetzen.

5. Schaltungsanordnung nach Anspruch 4, **dadurch gekennzeichnet, dass** durch das Versetzen der ersten Schalteinrichtung (21) in den Schließzustand die erste Transistoreinrichtung (24) mit einer Betriebsspannung (UB) versorgt wird und der Ausgang der ersten Tiefpasseinrichtung (26) den Pegel derart annimmt, dass die zweite Schalteinrichtung (41) in einen Schließzustand versetzt wird.

6. Schaltungsanordnung nach Anspruch 5, **dadurch gekennzeichnet, dass** durch das Versetzen der zweiten Schalteinrichtung (41) in den Schließzustand die zweite Transistoreinrichtung (44) mit der Betriebsspannung (UB) versorgt wird und ein Ausgang der zweiten Tiefpasseinrichtung (46) den Pegel derart annimmt, dass die erste Schalteinrichtung (21) unabhängig von einem Schaltzustand der Aufweck-Schalteinrichtung (28) in ihrem Schließzustand verbleibt.

7. Schaltungsanordnung nach einem der Ansprüche 1 bis 6, **dadurch gekennzeichnet, dass** die erste Teil-Schaltungsanordnung (2) eine Sensoreinrichtung, eine Aktoreinrichtung oder eine Sensor/Aktor-Einrichtung ist.

8. Schaltungsanordnung nach einem der Ansprüche 1 bis 6, **dadurch gekennzeichnet, dass** die zweite Teil-Schaltungsanordnung (4) eine zentrale elektronische Steuereinrichtung ist.

9. Schaltungsanordnung nach einem der vorangehenden Ansprüche, **dadurch gekennzeichnet, dass** die erste Teil-Schaltungsanordnung (2) Teil eines Fußbremsmoduls eines elektronischen Bremssystems in einem Kraftfahrzeug ist, und dass die zweite Teil-Schaltungsanordnung (4) eine zentrale elektronische Steuereinheit des elektronischen Bremssystems in dem Kraftfahrzeug ist.

10. Schaltungsanordnung nach einem der vorangehenden Ansprüche, **dadurch gekennzeichnet, dass** die erste und die zweite Schaltungsanordnung (2, 4) digitale Schaltungsanordnungen sind, und dass die erste und die zweite Schalteinrichtung (21, 41) elektronische Schalter sind.

11. Verfahren zum Aufwecken einer ersten Teil-Schaltungsanordnung (2) und einer zweiten Teil-Schaltungsanordnung (4), welche über Kommunikationsleitungen verbunden sind und eine bidirektionale Vollduplex-Kommunikationsschnittstelle mit einer Übertragungsrate von bis zu 20 KBit/s bilden, mittels einer Aufweck-Schalteinrichtung (28) aus einem ruhestromlosen Bereitschaftszustand, **gekennzeichnet durch** die Schritte:
- Versetzen der Aufweck-Schalteinrichtung (28) in einen Schließzustand,
- Versetzen einer ersten Schalteinrichtung (21) in der ersten Teil-Schaltungsanordnung (2) in einen Schließzustand;
- Versorgen einer ersten Transistoreinrichtung (24) mit einer Betriebsspannung (UB);
- Versetzen eines Ausgangs einer ersten Tiefpasseinrichtung (26) in einen hochpegeligen Zustand;
- Versetzen einer zweiten Schalteinrichtung (41) in der zweiten Teil-Schaltungsanordnung (4) in einen Schließzustand;
- Versorgen einer zweiten Transistoreinrichtung (44) mit einer Betriebsspannung (UB); und
- Versetzen eines Ausgangs einer zweiten Tiefpasseinrichtung (46) in einen hochpegeligen Zustand; wobei
- sodann unabhängig von dem Schaltzustand der Aufweck-Schalteinrichtung (28) der hochpegelige Zustand an dem Ausgang der zweiten Tiefpasseinrichtung (46) die erste Schalteinrichtung (21) in ihrem Schließzustand hält, und der hochpegelige Zustand an dem Ausgang der ersten Tiefpasseinrichtung (26) die zweite Schalteinrichtung (41) in ihrem Schließzustand hält.

## Claims

1. Circuit assembly for serial communication, comprising:
- a first circuit sub-assembly (2) for receiving and delivering detection and/or control signals;
- a second circuit sub-assembly (4) for receiving and delivering detection and/or control signals;
- a two-wire connecting line for the bidirectional connection of said first circuit sub-assembly (2) and said second circuit sub-assembly (4); and
- a wake-up switching means (28) for waking up said first circuit sub-assembly (2) and said second circuit sub-assembly (4) from a quiescent current-less standby operating mode of the respective sub-assembly,
**characterised in that**
- said first circuit sub-assembly (2) comprises a first switching means (21) that is connected to said wake-up switching means (28), and a first low-pass means (26;
- said second circuit sub-assembly (4) comprises a second switching means (41) and a second low-pass means (46); and
- said circuit assembly is so arranged that
- by switching said first switching means (21) into the closed state, it generates by means of said wake-up switching means (28) a level at the output of said first low-pass means (26), which passes said second switching means (41) into the closed state, and
- by switching said second switching means (41) into the closed state, it generates at the output of said second low-pass means (46) a level that maintains said first switching means (21) in its closed state.

2. Circuit assembly according to Claim 1, **characterized in that** said first circuit sub-assembly (2) includes a first signal-forming means (22) for forming a data signal on a data reception line (RxD) of said first circuit sub-assembly (2), which is connected to said first switching means (21), a first transistor means (24) connected to said first switching means (21) for controlling a data communication on a data transmission line (TxD) of said first circuit sub-assembly (2), said first low-pass means (26) that is disposed in said data transmission line (TxD) of said first circuit sub-assembly (2), and said wake-up switching means (28); and that said first switching means (21) is arranged for switching a supply voltage (UB) of said first circuit sub-assembly (2).

3. Circuit assembly according to Claim 1 or 2, **characterized in that** said second circuit sub-assembly (4) includes a second signal-forming means (42) for forming a data signal on a data reception line (RxD) of said second circuit sub-assembly (4), which is connected to said second switching means (41), a second transistor means (44) connected to said second switching means (41) for controlling a data communication on a data transmission line (TxD) of said second circuit sub-assembly (4), and said second low-pass means (46) disposed in said data transmission line (TxD) of said second circuit sub-assembly (4), and that said second switching means (41) is arranged for switching a supply voltage (UB) of said second circuit sub-assembly (4).

4. Circuit assembly according to Claim 2 or 3, **characterized in that** said wake-up switching means (28) is arranged for passing said first switching means (21) into a closed state in order to wake up said first and said second circuit sub-assemblies (2, 4).

5. Circuit assembly according to Claim 4, **characterized in that** by passing said first switching means (21) into the closed state, said first transistor means (24) is supplied with an operating voltage (UB) and the output of said first low-pass means (26) assumes the level in such a way that said second switching means (41) is passed into a closed state.

6. Circuit assembly according to Claim 5, **characterized in that** by passing said second switching means (41) into the closed state, said second transistor means (44) is supplied with said operating voltage (UB) and an output of said second low-pass means (46) assumes the level in such a way that said first switching means (21) remains in its closed state independently of a switching state of said wake-up switching means (28).

7. Circuit assembly according to any of the Claims 1 to 6, **characterized in that** said first circuit sub-assembly (2) is a sensor means, an actuator means or a sensor/actuator means.

8. Circuit assembly according to any of the Claims 1 to 6, **characterized in that** said second circuit sub-assembly (4) is a central electronic controller means.

9. Circuit assembly according to any of the preceding Claims, **characterized in that** said first circuit sub-assembly (2) is part of a foot brake module of an electronic braking system in a motor vehicle, and that said second circuit sub-assembly (4) is a central electronic controller unit of said electronic braking system in said motor vehicle.

10. Circuit assembly according to any of the preceding Claims, **characterized in that** said first and said second circuit assemblies (2, 4) are digital circuit assemblies and that said first and said second switching means (21, 41) are electronic switches.

11. Method of waking up a first circuit sub-assembly (2) and a second circuit sub-assembly (4), which are connected via communication lines and constitute a bidirectional full-duplex communication interface with a transmission rate of up to 20 kBit/s, by means of a wake-up switching means (28) from a quiescent current-less standby operating mode, **characterized by** the following steps:
- passing said wake-up switching means (28) into a closed state,
- passing a first switching means (21) in said first circuit sub-assembly (2) into a closed state;
- supplying a first transistor means (24) with an operating voltage (UB);
- passing an output of a first low-pass means (26) into a high-level state;
- passing a second switching means (41) in said second circuit sub-assembly (4) into a closed state;
- supplying a second transistor means (44) with an operating voltage (UB); and
- passing an output of a second low-pass means (46) into a high-level state; wherein
- then independently of the switching state of said wake-up switching means (28) said high-level state at the output of said second low-pass means (46) retains said first switching means (21) in its closed state, and said high-level state at the output of said first low-pass means (26) retains said second switching means (41) in its closed state.

## Revendications

1. Ensemble de circuit pour la communication série, comprenant:
- un premier sous-ensemble de circuit (2) pour la réception et l'émission des signaux de détection et/ou de commande ;
- un deuxième sous-ensemble de circuit (4) pour la réception et l'émission des signaux de détection et/ou de commande ;
- une ligne de connexion à deux câbles pour la connexion bidirectionnelle dudit premier sous-ensemble de circuit (2) et dudit deuxième sous-ensemble de circuit (4) ; et
- un moyen de commutation à fonction de réveil (28) pour le réveil dudit premier sous-ensemble de circuit (2) et dudit deuxième sous-ensemble de circuit (4) à partir d'un état inactif en mode de fonctionnement hors tension en attente du sous-ensemble respectif,
**caractérisé en ce**
- **que** ledit premier sous-ensemble de circuit (2) comprend un premier moyen commutateur (21), qui est relié audit moyen de commutation à fonction de réveil (28), et un premier moyen passe-bas (26) ;
- **que** ledit deuxième sous-ensemble de circuit (4) comprend un deuxième moyen commutateur (41) et un deuxième moyen passe-bas (46) ; et
- et en ce que ledit ensemble de circuit est organise d'une telle façon, que
- par commutation dudit premier moyen commutateur (21) en l'état fermé, il engendre, moyennant ledit moyen de commutation à fonction de réveil (28), un niveau à la sortie dudit premier moyen passe-bas (26), qui passe ledit deuxième moyen commutateur (41) en l'état fermé, et
- par commutation dudit deuxième moyen commutateur (41) en l'état fermé, il engendre à la sortie dudit deuxième moyen passe-bas (46) un niveau, qui maintient ledit premier moyen commutateur (21) en son état fermé.

2. Ensemble de circuit selon la revendication 1, **caractérisé en ce que** ledit premier sous-ensemble de circuit (2) renferme un premier moyen de formation de signal (22) à former un signal de données sur une ligne de réception de données (RxD) dudit premier sous-ensemble de circuit (2), qui est relié audit premier moyen commutateur (21), un premier moyen à transistor (24) relié audit premier moyen commutateur (21) afin de commander la communication de données sur une ligne de transmission de données (TxD) dudit premier sous-ensemble de circuit (2), ledit premier moyen passe-bas (26) qui est dispose dans ladite ligne de transmission de données (TxD) dudit premier sous-ensemble de circuit (2), et ledit moyen de commutation à fonction de réveil (28); et **en ce que** ledit premier moyen commutateur (21) est disposé à commuter une tension d'alimentation (UB) dudit premier sous-ensemble de circuit (2).

3. Ensemble de circuit selon la revendication 1 or 2, **caractérisé en ce que** ledit deuxième sous-ensemble de circuit (4) renferme un deuxième moyen de formation de signal (42) afin de former un signal de données sur une ligne de réception de données (RxD) dudit deuxième sous-ensemble de circuit (4), qui est relié audit deuxième moyen commutateur (41), un deuxième moyen à transistor (44) relié audit deuxième moyen commutateur (41) afin de commander une communication de données sur une ligne de transmission de données (TxD) dudit deuxième sous-ensemble de circuit (4), et ledit deuxième moyen passe-bas (46) dispose dans ladite ligne de transmission de données (TxD) dudit deuxième sous-ensemble de circuit (4), et **en ce que** ledit deuxième moyen commutateur (41) est disposé à commuter une tension d'alimentation (UB) dudit deuxième sous-ensemble de circuit (4).

4. Ensemble de circuit selon la revendication 2 ou 3, **caractérisé en ce que** ledit moyen de commutation à fonction de réveil (28) est disposé à passer ledit premier moyen commutateur (21) en un état fermé afin de réveiller lesdits premier et deuxième sous-ensembles de circuit (2, 4).

5. Ensemble de circuit selon la revendication 4, **caractérisé en ce qu'**en passant ledit premier moyen commutateur (21) en l'état fermé, ledit premier moyen à transistor (24) est alimenté en une tension de service (UB) et la sortie dudit premier moyen passe-bas (26) prend le niveau d'une telle manière, que ledit deuxième moyen commutateur (41) soit passé en un état fermé.

6. Ensemble de circuit selon la revendication 5, **caractérisé en ce qu'**en passant ledit deuxième moyen commutateur (41) en l'état fermé, ledit deuxième moyen à transistor (44) est alimenté en ladite tension de service (UB) et une sortie dudit deuxième moyen passe-bas (46) prend le niveau d'une telle manière, que ledit premier moyen commutateur (21) reste en son état fermé indépendamment d'un état de commutation dudit moyen de commutation à fonction de réveil (28).

7. Ensemble de circuit selon une quelconque des revendications 1 à 6, **caractérisé en ce que** ledit premier sous-ensemble de circuit (2) est un moyen détecteur, un moyen actionneur ou un moyen détecteur/actionneur.

8. Ensemble de circuit selon une quelconque des revendications 1 à 6, **caractérisé en ce que** ledit deuxième sous-ensemble de circuit (4) est un moyen de commande électronique central.

9. Ensemble de circuit selon une quelconque des revendications précédentes, **caractérisé en ce que** ledit premier sous-ensemble de circuit (2) constitue une partie d'un module de frein à pied d'un système de freinage électronique dans un véhicule à moteur, et **en ce que** ledit deuxième sous-ensemble de circuit (4) est une unité de commande électronique central dudit système de freinage électronique dans ledit véhicule à moteur.

10. Ensemble de circuit selon une quelconque des revendications précédentes, **caractérisé en ce que** lesdits premier et deuxième ensembles de circuit (2, 4) sont des ensembles de circuit numériques, et **en ce que** lesdits premier et deuxième moyens commutateurs (21, 41) sont des commutateurs électroniques.

11. Procédé à réveiller un premier sous-ensemble de circuit (2) et un deuxième sous-ensemble de circuit (4), qui sont relies via des lignes de communication et constituent une interface de communication bidirectionnelle duplex intégral à un taux de transmission de jusqu'à 20 kBit/s, moyennant un moyen de commutation à fonction de réveil (28) à partir d'un état inactif en mode de fonctionnement hors tension en attente, **caractérisé par** les étapes suivantes :
- passer ledit moyen de commutation à fonction de réveil (28) en un état fermé,
- passer un premier moyen commutateur (21) dans ledit premier sous-ensemble de circuit (2) en un état fermé ;
- alimenter un premier moyen à transistor (24) en une tension de service (U B) ;
- passer une sortie d'un premier moyen passe-bas (26) en un état à haut niveau ;
- passer un deuxième moyen commutateur (41) dans ledit deuxième sous-ensemble de circuit (4) en un état fermé ;
- alimenter un deuxième moyen à transistor (44) en une tension de service (UB) ; et
- passer une sortie d'un deuxième moyen passe-bas (46) en un état à haut niveau ; dans lequel
- ensuite, indépendamment de l'état de commutation dudit moyen de commutation à fonction de réveil (28), ledit état à haut niveau à la sortie dudit deuxième moyen passe-bas (46) maintient ledit premier moyen commutateur (21) en son état fermé, et ledit état à haut niveau à la sortie dudit premier moyen passe-bas (26) maintient ledit deuxième moyen commutateur (41) en son état fermé.
